# EUROPEAN PATENT APPLICATION

(11) **EP 2 698 721 A1**
(43) Date of publication of application: **19.02.2014**
(21) Application number: 13000336.1
(22) Date of filing: 23.01.2013
(51) Int. Cl.: G06F 13/38

(54) **External CD module with USB interface and operation method thereof**

(30) Priority: 14.08.2012 US 201213585473
(71) Applicant: Lite-On It Corporation, Taipei (TW)
(72) Inventor: Kaiser, Uwe, D-35614 Aßlar (DE); Leist, Martin, D-35578 Wetzlar (DE)
(74) Representative: Müller-Boré & Partner Patentanwälte PartG mbB

(57) **Abstract**

The present invention provides an external CD module for connecting to a remote host device, comprising: a CD mechanism for accessing a data of a CD; a controller, which includes a FAT file system, and the controller is connected to the CD mechanism via a control interface and a data interface to access and convert the data into a file-based format; and a USB interface responsive to the controller, wherein the controller is configured to provide the converted data to the remote host device using MSC communication protocol via the USB interface.

## Description

### BACKGROUND OF THE INVENTION

### 1. Field of the Invention

The present invention relates to an external CD module with USB interface, in particular to an external CD module with USB interface for infotainment systems that are used in automotives and the operation method thereof.

### 2. Description of the Related Art

A common way of connecting a compact disc (CD) module to an infotainment head unit is to use a standard control interface like Inter Integrated Circuit (I²C) and a standard interface for data transfer like Integrated Interchip Sound (I²S) or Sony/Philips Digital InterFace (SPDIF). For now, most of the CD modules are built into the head unit. However, the technology used in infotainment head unit may change rapidly over a short period of time. Thus, the automotive manufacturers may change the infotainment architecture in such way that the CD function in a car will be an option and thus not a standard device anymore. For this reason, a CD module should be placed somewhere in the car as a retrofit. Thus, the problem of how to connect an "external" CD module to the head unit is occurred since most of the control and data interface to the CD mechanism are made for short distance.

One may consider dissolving this problem by using universal serial bus (USB) interface. However, transforming the content of audio CDs to data which can be transferred via the USB standard protocol MSC (mass storage class) is still problematic. Accordingly, there remains a need to solve the problem on how to connect such external CD module via a USB interface to a head unit.

### SUMMARY OF THE INVENTION

In view of the foregoing problems of the prior art, the invention is related to a solution to overcome the problems with the standard hardware for CD modules to realize a USB interface using the mass storage class (MSC) protocol, such as the MSC protocol used for UBS Sticks. Furthermore, the invention is also related to convert the data from the CD by using a file allocation table (FAT) file system. With this concept, the external CD module can behave at the USB interface like a USB Stick.

To achieve the foregoing objective, the present invention provides an external CD module for connecting to a remote host device, comprising: a CD mechanism for accessing a data of a CD; a controller, which includes a file allocation table (FAT) file system, and the controller is connected to the CD mechanism via a control interface and a data interface to access and convert the data into a file-based format; and a universal serial bus (USB) interface responsive to the controller, wherein the controller is configured to provide the converted data to the remote host device using mass storage class (MSC) communication protocol via the USB interface.

Another aspect of the invention is to provide a method for a remote host device to access a data stored in a CD from an external CD module, comprising: accessing and evaluating the CD file system via a control interface and a data interface embedded in a CD mechanism by a controller; storing the FAT file system on a storage device; transmitting a mass storage class (MSC) request for a data file from the remote host device to the controller through a USB interface; receiving the MSC request and determining the data file associated with the MSC request by the controller; and accessing the data file using mass storage class (MSC) communication protocol via the USB interface.

### BRIEF DESCRIPTION OF THE DRAWINGS

FIG. 1 illustrates an exemplary embodiment of the external CD module of the present invention.
FIG. 2 is a flow chart showing an exemplary method for use by the external CD module of the present invention.

### DETAILED DESCRIPTION OF THE PREFERRED EMBODIMENTS

The technical contents of the present invention will become apparent with the detailed description of preferred embodiments and the illustration of related drawings as follows.

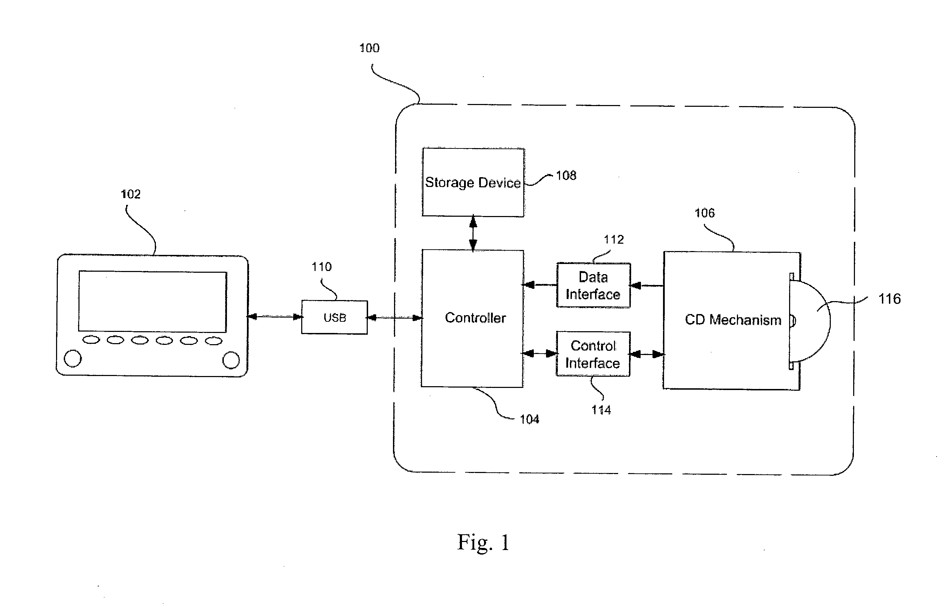

FIG. 1 is an illustration of an exemplary external CD module **100** that includes a controller **104** and a CD mechanism **106.** The CD mechanism **106** is responsive to the controller **104** via a data interface **112** and a control interface **114.** In a preferable embodiment, the data interface **112** is an integrated interchip sound (I²S) and the control interface **114** is an inter integrated circuit (I²C). I²S, also known as Inter-IC Sound, is an electrical serial bus interface standard used for connecting digital audio devices together. It is most commonly used to carry PCM information (pulse code modulation) between the CD transport and the DAC in a CD player. I²C, generically referred to as "two-wire interface," is a multi-master serial single-ended computer bus that is used to attach low-speed peripherals to an electronic device.

In addition, the exemplary external CD module **100** is communicated with a remote host device **102.** The remote host device **102** is a remote host device that communicates with the controller **104** via a USB interface **110.** In a further example, the controller **104** may be a processor. The controller **104** and the CD mechanism **106** are housed together to form the external CD module **100.** In a preferable embodiment, the remote host device **102** is an infotainment head unit. The infotainment head unit, sometimes referred to as a "deck," is a component of a stereo system either in a vehicle or home cinema system which provides a unified hardware interface for the various components of an electronic media system. In an exemplary embodiment, infotainment head unit is a car infotainment head unit.

As used herein, the term "external CD module **100"** refers to that the CD module **100** is not built in the remote host device **102,** and the term "remote host device **102"** refers to a host device where the distance between the external CD module **100** and the remote host device **102** may be 0.03 meters to 2 meters or more, and the remote host device **102** supports for USB storage device.

The external CD module **100** may further comprise a storage device **108** connected to the controller **104.** The storage device 108 may be a non-volatile memory like EPROM, EEPROM and NAND flash memory. In an exemplary embodiment, the controller **104** includes a FAT file system. In general, the FAT file system includes, for example, a boot sector, which includes basic file system information and pointers to logical locations of other sectors and an operating systems boot loader code. The file system may include a root directory region that stores a directory table including information about files and directories in the root directory. In addition, the file system points out a data region where the actual file and directory data is stored. In general, FAT file system is organized in to clusters and sectors. Data stored in the data region is stored in clusters. The controller **104** may be configured to create a corresponding FAT file system with different possible CD system of a CD **116,** such as, without limitation, CD-Audio, ISO966, Joliet or universal disc format (UDF) file system, and the created FAT file system is stored on the storage device **108.** When the remote host device **102** accesses the controller **104** using a file-based communication, such as a mass storage class (MSC) communication, the controller **104** may determine a location of the file from the file allocation table and request data from the location on the storage device **108.** Further, the controller **104** may provide the remote host device **102** with the file allocation table and a directory table in response to a request by the remote host device **102.** Accordingly, the external CD module reacts as a USB stick via the USB interface.

In a particular embodiment, the controller **104,** the CD mechanism **106** and the storage device **108** are included in the external CD module **100,** and the external CD module **100** may include a universal serial bus (USB) port. As such, the external CD module **100** is coupled with the remote host device **102** having a compatible USB interface, and the remote host device **102** may access the controller **104** using a file-based request, such as USB MSC communication. Based on the communication format of the remote host device **102,** the controller **104** may respond using a file-based communication protocol. The controller **104** may intercept the communication, determine a location of the file from the file allocation table and request data from the location on the storage device **108** in response to the communication form the remote host device **102.**

In an embodiment of the present invention, when the CD system is CD-Audio, the data from the CD-Audio tracks is converted into a .wav file with uncompressed audio samples and the FAT file system is used. Thus, it is not needed to resample or encode the audio tracks in a different format. But it is also possible to provide the compressed file format like MP3, WMA. When the data is converted into .wav file, the headers of .wav file are stored in reserved sectors in RAM.

In an embodiment of the present invention, the external CD module **100** may be powered by a separate power supply, such as a battery, or powered by the remote host device **102** via USB interface 110 directly.

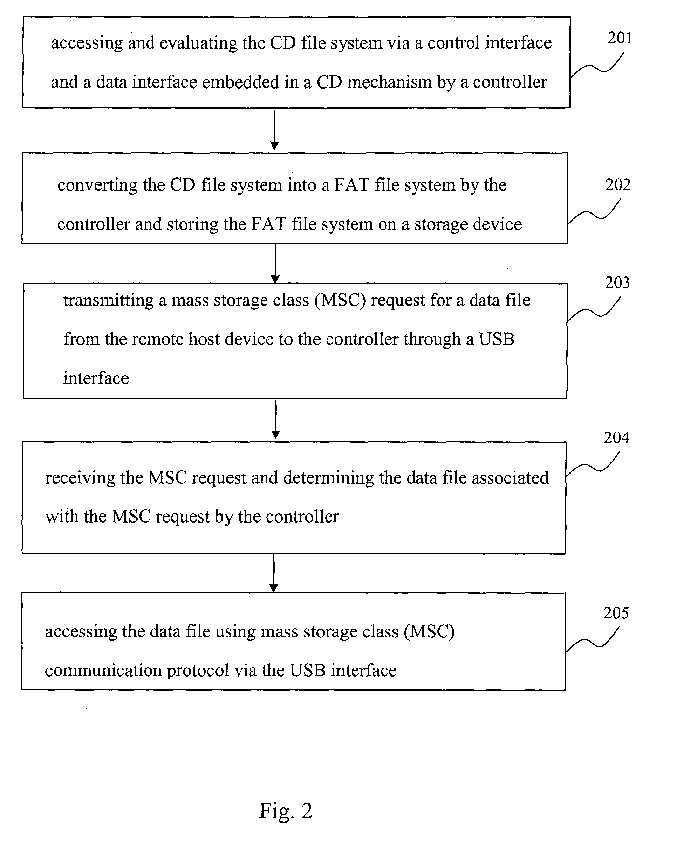

FIG. 2 is a flow chart showing exemplary method for use by the external CD module of the present invention. The method includes accessing and evaluating the CD file system via a control interface and a data interface embedded in a CD mechanism by a controller, as shown by the functional block **201.** Examples of the CD file system include but are not limited to CD-Audio, ISO966, Joliet or universal disc format (UDF) file system. As shown by function block **202,** as soon as the evaluation is done, the CD file system is converted into a FAT file system by the controller and is stored in a storage device. In an exemplary embodiment, the storage device may be coupled to the controller, or is embedded in the controller. The following step is that the remote host device transmits a mass storage class (MSC) request for a data file to the controller through a USB interface, as shown by the functional block **203.** For example, the remote host device may request for a file allocation table and root directory table. In a particular embodiment, the remote host device may request data from a logical address that is associated with a FAT region and directory region of the storage device. Then the controller receives the MSC request and determines the data file associated with the MSC request, as shown by the functional block **204;** and the remote host device accesses the data file using mass storage class (MSC) communication protocol via the USB interface, as shown by the functional block **205.**

In accordance with various embodiments, the method described herein may be implemented as one or more software programs running on a processor. Dedicated hardware implementations including application including, without limitation, application specific integrated circuits, programmed logic arrays and other hardware devices can likewise be constructed to implement the method described herein. Also, the method may be implemented as one or more software programs and further combined with a hardware device to form a firmware.

While the invention has been described in connection with what is presently considered to be the most practical and preferred embodiments, it is understood that the invention is not to be limited to the disclosed embodiment, but on the contrary, is intended to cover various modifications and equivalent arrangements included within the spirit and scope of the appended claims.

## Claims

1. An external compact disc (CD) module for connecting to a remote host device, comprising:
a CD mechanism for accessing a data of a CD;
a controller, which includes a file allocation table (FAT) file system, and the controller is connected to the CD mechanism via a control interface and a data interface to access and convert the data into a file-based format; and
a universal serial bus (USB) interface responsive to the controller, wherein the controller is configured to provide the converted data to the remote host device using mass storage class (MSC) communication protocol via the USB interface.

2. The external CD module of claim 1, wherein the control interface is an inter integrated circuit (I²C).

3. The external CD module of any of claims 1 or 2, wherein the data interface is an integrated interchip sound (I²S).

4. The external CD module of any of claims 1 to 3, wherein the remote host device is an infotainment head unit.

5. The external CD module of any of claims 1 to 4, wherein the file system of the CD is one of CD-Audio, ISO966, Joliet or universal disc format (UDF).

6. The external CD module of any of claims 1 to 4, wherein when the file system is CD-Audio, the data of the CD is converted to .wav file.

7. The external CD module of any of claims 1 to 6, further comprising a storage device connected to the controller to store the converted data.

8. A method for a remote host device to access a data stored in a CD from an external CD module, comprising:
accessing and evaluating the CD file system via a control interface and a data interface embedded in a CD mechanism by a controller;
converting the CD file system into a FAT file system by the controller and storing the FAT file system on a storage device;
transmitting a mass storage class (MSC) request for a data file from the remote host device to the controller through a USB interface;
receiving the MSC request and determining the data file associated with the MSC request by the controller; and
accessing the data file using mass storage class (MSC) communication protocol via the USB interface by the remote host device.

9. The method of claim 8, wherein the MSC request includes a sector and offset location of the data file.

10. The method of any of claims 8 or 9, wherein the control interface is an inter integrated circuit (I²C).

11. The method of any of claims 8 or 9, wherein the data interface is an integrated interchip sound (I²S).

12. The method of any of claims 8 to 11, wherein the data stored in the CD is in a format of CD-Audio, ISO966, Joliet or universal disc format (UDF) file system.

13. The method of any of claims 8 to 12, wherein the remote host device is an infotainment head unit.
